# EUROPEAN PATENT SPECIFICATION

(11) **EP 3 281 779 B1**
(45) Date of publication and mention of the grant of the patent: **14.08.2024**
(21) Application number: 16776563.5
(22) Date of filing: 06.04.2016
(51) Int. Cl.: B29D 30/38

(54) **MANUFACTURING METHOD OF A ROLLED RUBBER MEMBER**
HERSTELLUNGSVERFAHREN FÜR EIN GEWALZTES GUMMIELEMENT
PROCÉDÉ DE FABRICATION D'UN ÉLÉMENT EN CAOUTCHOUC LAMINÉ

(30) Priority: 06.04.2015 JP 2015077846
(43) Date of publication of application: 14.02.2018
(73) Proprietor: The Yokohama Rubber Co., Ltd., Kanagawa Prefecture, 254-8601 (JP)
(72) Inventor: KISHIHATA, Kazuaki, Hiratsuka-shi Kanagawa 254-8601 (JP)
(74) Representative: Dilg, Haeusler, Schindelmann Patentanwaltsgesellschaft mbH
(86) International application number: PCT/JP2016/061262
(87) International publication number: WO 2016/163397

(56) References cited:
- EP-A1- 2 567 833
- WO-A1-2007/010599
- DE-A1- 102013 110 934
- JP-A- 2003 129 350
- JP-A- 2004 314 548
- JP-A- 2012 091 658
- JP-A- 2013 049 382

## Description

### Technical Field

The present invention relates to a method of manufacturing a rubber rolled member that is used in pneumatic tires, and in further detail, relates to a manufacturing method of a rubber rolled member that can effectively suppress blister defects and that improves the air dispersibility during vulcanizing at the rubber layer interface.

### Background Art

Vulcanizing defects known as blister defects may occur when vulcanizing pneumatic tires. Blister defects are defects where moisture and residual air included in rubber, as well as residual air remaining in steps that are formed at an end part of tire component members during tire formation are locally collected during vulcanizing, and the resulting air bubbles form a blister without dispersing during vulcanizing, and thus remain in the tire. The moisture and residual air that are included in rubber form countless bubbles during initial stage of vulcanization, and most of the bubbles are eliminated by microdispersion during vulcanizing. However, gas bubbles collect in areas where the pressurizing force is weak during microdispersion, and bubbles may reoccur to form blisters after vulcanizing is complete.

In order to suppress blister defects, the tire component member is pressed by a stitcher during tire formation to promote air dispersion, and air is discharged through vent holes provided on the inner surface of the mold during vulcanizing, but the residual air inside the tire cannot be sufficiently discharged simply by this method.

In response, and based on the finding that residual air pockets are easily formed between the carcass layer and members adjacent thereto, there is a proposal to provide an organic fiber cord for absorbing air that is not covered with rubber on at least one surface of the carcass layer, and the residual air between the carcass layer and the adjacent members is absorbed by this organic fiber cord, and thus the formation of residual air pockets during vulcanizing can be prevented (for example, refer to Patent Literature 1).

However, if the organic fiber cord for absorbing air which is not rubber coated is provided on at least one surface of the carcass layer as described above, while the residual air between the carcass layer and the adjacent members can be absorbed, at the present, blister defects cannot necessarily be effectively suppressed. Furthermore, if the organic fiber cord for absorbing air that is not rubber coated is provided on the surface of the carcass layer, there is a possibility that the organic fiber cord will detach or become misaligned during the tire forming step. Manufacturing methods and manufacturing devices are disclosed in DE 10 2013 110934 and in JP 2004 314548, where at least one independently supplied thread is inserted between a first rubber layer and a second number layer; the thread being embedded in the longitudinal direction of the rubber rolled member. EP 2 567 833 discloses a carcass ply for a pneumatic tire comprising bleeder cords having an air bleeding function during vulcanization.

### Citation List

### Patent Literature

Patent Document 1: US Patent Application No. 2013/035555

### Summary of Invention

### Technical Problem

An object of the present invention is to provide a manufacturing method of a rubber rolled member that can effectively suppress blister defects and that improves the air dispersibility during vulcanizing at the rubber layer interface.

### Solution to Problem

The manufacturing method of a rubber rolled member of the present invention for achieving the aforementioned object includes the steps of: forming a first rubber layer by a first pair of rolling rollers; forming a second rubber layer by a second pair of rolling rollers; and layering the first rubber layer and the second rubber layer together to manufacture a rubber rolled member; at least one independently supplied thread being inserted between the first rubber layer and the second number layer, and the thread being embedded in the longitudinal direction of the rubber rolled member, a breaking strength of the thread being 100 N or less and a cord density of the thread being 5 strands/50 mm or less.

Furthermore, the manufacturing device for a rubber rolled member of the present disclosure for achieving the aforementioned object includes: a first pair of rolling rollers that form the first rubber layer; a second pair of rolling rollers that form the second rubber rolled member; a layering device that layers the first rubber layer and the second rubber layer together; and an insertion device that inserts at least one independently supplied thread between the first rubber layer and the second rubber layer, a breaking strength of the thread is 100 N or less and a cord density of the thread being 5 strands/50 mm or less.

### Advantageous Effects of Invention

As a result of extensive studies into blister defects that occur during vulcanizing, the present inventors discovered that blister defects will easily occur at the interface of the rubber layer that constitutes the rubber rolled member in a pneumatic tire that uses a rubber rolled member, and thus achieved the present invention.

In other words, the present invention improves air dispersibility during vulcanizing at the interface between the first rubber layer and the second rubber layer, and can effectively suppress blister defects by inserting at least one independently supplied thread between the first rubber layer and the second rubber layer, and embedding the thread along the longitudinal direction of the rubber rolled member. Furthermore, when arranging the thread between the first rubber layer and the second rubber layer constituting the rubber rolled member, detaching and misaligning of the thread will not occur during the tire forming step, and therefore there is also an advantage that the tire forming step can be smoothly performed.

With the present invention, the first rubber layer and the second rubber layer can be formed from mutually different rubbers. For example, a case where the first rubber layer corresponding to the inner liner layer and the second rubber layer corresponding to the tie rubber layer are layered together to manufacture a rubber rolled member is suitable.

The breaking strength of the thread is preferably 100 N or less. The thread is provided to improve the air dispersibility and is not a reinforcing member, so the effect on the behavior of the rubber rolled member during the tire forming process can be suppressed to a minimum by specifying the upper limit of the breaking strength.

The cord density of the thread is preferably 5 strands/50 mm or less. The thread is provided to improve the air dispersibility and is not a reinforcing member, so the effect on the behavior of the rubber rolled member during the tire forming process can be suppressed to a minimum by specifying the upper limit of the cord density.

### Brief Description of Drawings

- FIG. 1: is a side view illustrating the manufacturing device for the rubber rolled member which is an embodiment of the present invention.
- FIG. 2: is a side surface view illustrating a manufacturing device for the rubber rolled member which is another embodiment of the present invention.
- FIG. 3: is a cross-sectional view illustrating an example of the rubber rolled member obtained by the present invention.
- FIG. 4: is a meridian cross-sectional view illustrating an example of a pneumatic tire obtained according to the present invention.

### Description of Embodiments

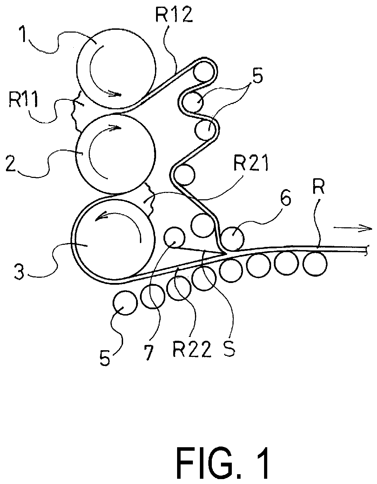

The configuration of the present invention is described below in detail while referring to the attached drawings. FIG. 1 illustrates a manufacturing device for a rubber rolled member which is an embodiment of the present invention. As illustrated in FIG. 1, the manufacturing device of the rubber rolled member of the present embodiment has three rolling rollers 1 to 3 provided with mutually parallel rotational axes. The first pair of rolling rollers 1, 2 are configured so as to rotate in mutually opposite directions while maintaining a gap between the outer circumferential surfaces. Therefore, the rubber R11 is held in a bank on the opposite side as the direction of rotation of the rolling rollers 1, 2, and a first rubber layer R12 with a pre-determined thickness is formed by the rubber R11 passing through the rolling rollers 1, 2. The second pair of rolling rollers 2, 3 are configured so as to rotate in mutually opposite directions while maintaining a gap between the outer circumferential surfaces. Therefore, the rubber R21 is held in a bank on the opposite side as the direction of rotation of the rolling rollers 2, 3, and a second rubber layer R22 with a pre-determined thickness is formed by the rubber R21 passing through the rolling rollers 2, 3.

The first rubber layer R12 and the second rubber layer R22 are guided by a guide roller 5 and provided to a layering device 6. The layering device 6 integrally compression bonds the mutually layered first rubber layer R12 and second rubber layer R22, and discharges a rubber rolled member R. This type of layering device 6 can be configured from a pair of rollers.

The aforementioned manufacturing device for a rubber rolled member has a thread inserting device 7 that inserts at least one strand of thread S between the first rubber layer R12 and the second rubber layer R22. The thread inserting device 7 has a bobbin on which the thread S is wound, and the thread S is continuously supplied from the bobbin. This type of thread inserting device 7 can be installed at a plurality of locations in the width direction of the rubber rolled member R. The thread S is supplied in an independent form that does not configure a fabric. Furthermore, the thread S is automatically fed out from the thread inserting device 7 in conjunction with the rubber rolled member R being discharged because the thread is sandwiched between the first rubber layer R12 and the second rubber layer R22.

As illustrated in FIG. 1, when manufacturing the rubber rolled member R using the aforementioned device, the rubber R11 is rolled by the first pair of rolling rollers 1, 2 to form the first rubber layer R12, while at the same time, the rubber R21 is rolled by the second pair of rolling rollers 2, 3 to form the second rubber layer R22. Furthermore, the rubber rolled member R is continuously manufactured by layering the first rubber layer R12 and the second rubber layer R22 together in the layering device 6. At this time, the thread S can be embedded in the longitudinal direction of the rubber rolled member R by having at least one thread S independently supplied and inserted by the thread inserting device 7 between the first rubber layer R12 and the second rubber layer R22.

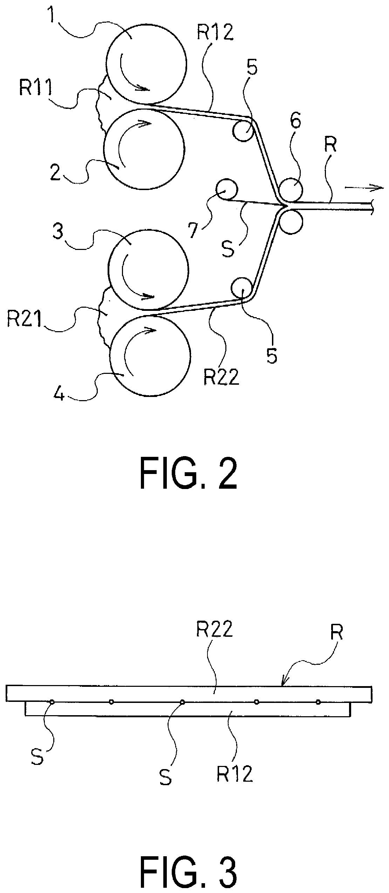

FIG. 2 illustrates the manufacturing device for the rubber rolled member according to another embodiment of the present invention. As illustrated in FIG. 2, the manufacturing device of the rubber rolled member of the present embodiment has four rolling rollers 1 to 4 provided with mutually parallel rotational axes. The first pair of rolling rollers 1, 2 are configured so as to rotate in mutually opposite directions while maintaining a gap between the outer circumferential surfaces. Therefore, the rubber R11 is held in a bank on the opposite side as the direction of rotation of the rolling rollers 1, 2, and a first rubber layer R12 with a pre-determined thickness is formed by the rubber R11 passing through the rolling rollers 1, 2. The second pair of rolling rollers 3, 4 are configured so as to rotate in mutually opposite directions while maintaining a gap between the outer circumferential surfaces. Therefore, the rubber R21 is held in a bank on the opposite side as the direction of rotation of the rolling rollers 3, 4, and a second rubber layer R22 with a pre-determined thickness is formed by the rubber R21 passing through the rolling rollers 3, 4.

The first rubber layer R12 and the second rubber layer R22 are guided by a guide roller 5 and provided to a layering device 6. The layering device 6 integrally compression bonds the layered first rubber layer R12 and second rubber layer R22, and discharges a rubber rolled member R. The thread inserting device 7 is installed to insert at least one strand of thread S that is independently supplied between the first rubber layer R12 and the second rubber layer R22.

As illustrated in FIG. 2, when manufacturing the rubber rolled member R using the aforementioned device, the rubber R11 is rolled by the first pair of rolling rollers 1, 2 to form the first rubber layer R12, while at the same time, the rubber R21 is rolled by the second pair of rolling rollers 3, 4 to form the second rubber layer R22. Furthermore, the rubber rolled member R is continuously manufactured by layering the first rubber layer R12 and the second rubber layer R22 together in the layering device 6. At this time, the thread S can be embedded in the longitudinal direction of the rubber rolled member R by having at least one thread S independently supplied and inserted by the thread inserting device 7 between the first rubber layer R12 and the second rubber layer R22.

With the manufacturing method of the rubber rolled member described above, at least one strand of thread S is independently supplied and is inserted between the first rubber layer R12 and the second rubber layer R22, and the thread S is embedded in the longitudinal direction of the rubber rolled member R, and thereby improves air dispersibility during vulcanizing at the interface between the first rubber layer R11 and the second rubber layer R21, and can effectively suppress blister defects. Furthermore, when arranging the thread S between the first rubber layer R12 and the second rubber layer R22 constituting the rubber rolled member R, detaching and misaligning of the thread S will not occur during the tire forming step, and therefore there is also an advantage that the tire forming step can be smoothly performed.

The breaking strength of the thread S is preferably 100 N or less, and more preferably 1 N to 5 N. This thread S is provided to improve the air dispersibility and is not a reinforcing member, so the effect on the behavior of the rubber rolled member R during the tire forming process can be suppressed to a minimum by specifying the upper limit of the breaking strength. If the breaking strength of the thread S is too high, there is a possibility of having a negative effect on the tire forming process.

The component material of the thread S is not particularly restricted, but for example, synthetic fiber such as nylon, polyester, rayon, and the like, or natural fibers such as cotton or the like can be used. Furthermore, the total linear density of the thread S is preferably within a range of 25 dtex to 170 dtex. Thereby, favorable air dispersibility can be ensured while keeping the breaking strength low.

The cord density of the thread is preferably 5 strands/50 mm or less. This thread S is provided to improve the air dispersibility and is not a reinforcing member, so the effect on the behavior of the rubber rolled member during the tire forming process can be suppressed to a minimum by specifying the upper limit of the cord density. If the cord density of the thread S is too high, there is a possibility of having a negative effect on the tire forming process. The cord density of the thread S is specified by a mutual interval. For example, if the mutual interval of the thread S is P mm, the cord density (strand/50 mm) of the thread S will be 50/P. Furthermore, if the cord count of the thread S at the interface is 1 strand, the cord density can be considered to be 5 strands/50 mm or less.

FIG. 3 illustrates an example of the rubber rolled member obtained by the present invention. In FIG. 3, the rubber rolled member R is made by layering the first rubber layer R12 corresponding to the inner liner layer and the second rubber layer R22 corresponding to the tie rubber layer together. With the rubber rolled member R, a plurality of strands of thread S that extend in the longitudinal direction are provided at a predetermined interval in the width direction of the rubber rolled member R.

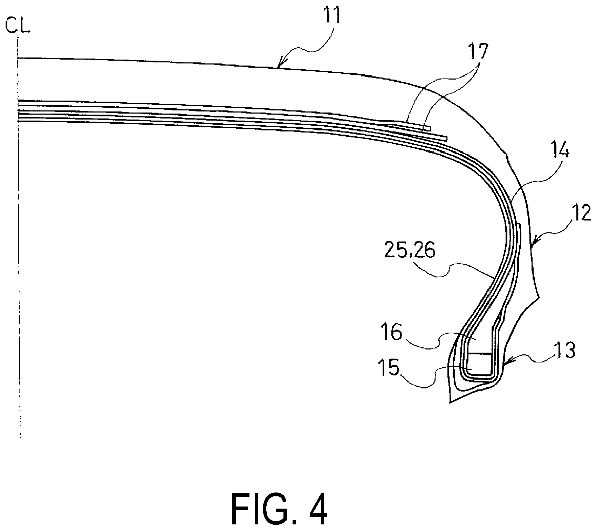

FIG. 4 illustrates one example of a pneumatic tire obtained by the present invention. FIG. 4 illustrates only a portion of one side of the tire centerline CL, but this pneumatic tire has a configuration that also corresponds to the other side of the tire centerline CL.

In FIGS. 4, 11 is a tread portion, 12 is a sidewall portion, and 13 is a bead portion. Two carcass layers 14 including a plurality of reinforcing cords extending in a tire radial direction are laid between a pair of left and right bead portions 13,13. Ends of the carcass layers 14 are folded around a bead cores 15 from a tire inner side to a tire outer side. A bead filler 16 formed from a rubber composition having a high degree of hardness is disposed on peripheries of the bead cores 15, and the bead filler 16 is encompassed by the carcass layer 14.

A plurality of belt layers 17 is embedded on the outer circumferential side of the carcass layer 14 in the tread portion 11. These belt layers 17 include a plurality of reinforcing cords that are inclined with respect to the tire circumferential direction and the reinforcing cords are disposed so that the reinforcing cords of each layer are orientated so as to intersect each other.

A multilayer structure containing an inner liner layer 25 and a tie rubber layer 26 is provided along the carcass layer 14 on the tire inner surface. The inner liner layer 25 is exposed on the tire inner surface, and the tie rubber layer 26 is interposed between the carcass layer 14 and the inner liner layer 25.

When manufacturing the pneumatic tire, the inner liner layer 25 and the tie rubber layer 26 are formed as a rubber rolled member R where the inner liner layer 25 and the tie rubber layer 25 are layered, and later supplied to the tire molding step. At least one strand of thread S is embedded so as to extend in the circumferential direction of the tire at the interface with the rubber rolled member R.

If the pneumatic tire configured in this manner is to be vulcanized, the unvulcanized tire that was molded in the tire molding step is placed in a mold, and the tire is heated with pressure applied from the tire inner side using a bladder. At this time, the moisture and air remaining inside the tire will create bubbles at the start of vulcanization, but most of the bubbles will be microdispersed and eliminated during vulcanization. However, gas bubbles will locally collect in areas where the pressurizing force is weak during microdispersion. In this regard, the air dispersibility during vulcanization is improved at the interface between the inner liner layer 25 and the tie rubber layer 25 by providing at least one strand of thread S at the interface between the inner liner layer 25 and the tie rubber layer 25, and thus blister defects can be effectively suppressed.

### Examples

When manufacturing a pneumatic tire with a tire size of 225/65 R17, a rubber rolled member including a first rubber layer corresponding to the inner liner layer and the second rubber layer corresponding to the tie rubber layer was formed by the device illustrated in FIG. 1, 8 strands of thread extending in the longitudinal direction of the rubber rolled member were embedded between the first rubber layer and the second rubber layer, and a pneumatic tire was manufactured using the rubber rolled member containing this thread (embodiment 1). The thread was made of cotton fiber, and the thread had a total linear density of 29.5 dtex. The breaking strength of the thread was 1 N. Furthermore, a pneumatic tire was manufactured by the same method as embodiment 1, except that the thread was not provided at the interface between the inner liner layer and the tie rubber layer (Conventional Example 1).

96 pneumatic tires made by each of the manufacturing methods of embodiment 1 and conventional example 1 were vulcanized, examined for the presence of blister defects in the tires after vulcanizing, and the occurrence rate of blister defects was determined. The result showed that the tires of embodiment 1 had a lower occurrence of blister defects on the tire inner surface than those of the Conventional Example 1. Furthermore, the occurrence rate of blister defects with Embodiment 1 was approximately 14% of the occurrence rate of blister defects with the Conventional Example 1.

### Reference Signs List

1 to 4 Rolling roller
5 Guide roller
6 Layering device
7 Thread inserting device
25 Innerliner layer
26 Tie rubber layer
R11, R21 Rubber
R21 First rubber layer
R22 Second rubber layer
R Rubber rolled member
S Thread

## Claims

1. A method of manufacturing a rubber rolled member (R), comprising the steps of:
2); forming a first rubber layer (R12) by a first pair of rolling rollers (1,
forming a second rubber layer (R22) by a second pair of rolling rollers (2, 3; 3, 4); and
layering the first rubber layer (R11) and the second rubber layer (R22) together to manufacture a rubber rolled member (R);
at least one independently supplied thread (S) being inserted between the first rubber layer (R12) and the second number layer (R22), and the thread (S) being embedded in the longitudinal direction of the rubber rolled member (R),
wherein
a breaking strength of the thread (S) is 100 N or less and a cord density of the thread (S) is 5 strands/50 mm or less.

2. The method of manufacturing a rubber rolled member according to claim 1, wherein
the first rubber layer (R12) and the second rubber layer (R22) are formed from mutually different rubbers.

## Patentansprüche

1. Verfahren zum Herstellen eines gewalzten Gummiglieds (R), umfassend die Schritte:
Formen einer ersten Gummischicht (R12) durch ein erstes Paar von Walzrollen (1, 2);
Formen einer zweiten Gummischicht (R22) durch ein zweites Paar von Walzrollen (2, 3; 3, 4); und
Zusammenschichten der ersten Gummischicht (R11) und der zweiten Gummischicht (R22), um ein gewalztes Gummiglied (R) herzustellen;
wobei zwischen der ersten Gummischicht (R12) und der zweiten Nummernschicht (R22) mindestens ein unabhängig zugeführtes Gewinde (S) eingefügt ist und das Gewinde (S) in Längsrichtung des gewalzten Gummiglieds (R) eingebettet ist, wobei
eine Bruchfestigkeit des Gewindes (S) 100 N oder weniger beträgt und eine Cordfadendichte des Gewindes (S) 5 Stränge/50 mm oder weniger beträgt.

2. Verfahren zum Herstellen eines gewalzten Gummiglieds nach Anspruch 1, wobei
die erste Gummischicht (R12) und die zweite Gummischicht (R22) aus voneinander unterschiedlichen Gummis geformt sind.

## Revendications

1. Procédé de fabrication d'un élément laminé en caoutchouc (R), comprenant les étapes consistant à :
former une première couche de caoutchouc (R12) par une première paire de rouleaux de laminage (1, 2) ;
former une seconde couche de caoutchouc (R22) par une seconde paire de rouleaux (2, 3 ; 3, 4) ; et
superposer la première couche de caoutchouc (R11) et la seconde couche de caoutchouc (R22) pour fabriquer un élément laminé en caoutchouc (R) ;
au moins un fil (S) fourni indépendamment étant inséré entre la première couche de caoutchouc (R12) et la seconde couche de caoutchouc (R22), et le fil (S) étant incorporé dans la direction longitudinale de l'élément laminé en caoutchouc (R), dans lequel
une résistance à la rupture du fil (S) est inférieure ou égale à 100 N et une densité de câble du fil (S) est inférieure ou égale à 5 brins/50 mm.

2. Procédé de fabrication d'un élément laminé en caoutchouc selon la revendication 1, dans lequel
la première couche de caoutchouc (R12) et la seconde couche de caoutchouc (R22) sont formées de caoutchoucs mutuellement différents.
